# EUROPEAN PATENT SPECIFICATION

(11) **EP 1 547 484 B1**
(45) Date of publication and mention of the grant of the patent: **30.11.2016**
(21) Application number: 04028577.7
(22) Date of filing: 02.12.2004
(51) Int. Cl.: A44B 11/25

(54) **Tongue for a child restraint system and child restraint system**
Steckzunge für ein Kinderrückhaltesystem und Kinderrückhaltesystem
Languette d'accrochage pour un système de retenue pour enfant et système de retenue pour enfant

(30) Priority: 18.12.2003 JP 2003421052
(43) Date of publication of application: 29.06.2005
(73) Proprietor: TAKATA CORPORATION, Minato-ku, Tokyo 106-8510 (JP)
(72) Inventor: Yamanishi, Takahiro, Minato-ku Tokyo 106-8510 (JP)
(74) Representative: Vossius & Partner Patentanwälte Rechtsanwälte mbB

(56) References cited:
- EP-A- 0 404 730
- GB-A- 875 807
- US-A1- 2002 000 024

## Description

The present invention relates to a child restraint tongue, and more specifically, it relates to a child restraint tongue in which a pair of tongue plates is inserted in parallel into tongue insertion holes of a buckle unit. The present invention also relates to a child restraint system including the child restraint tongue and the buckle unit into which the child restraint tongue is inserted (see EP-A-0 404 730).

Known tongues attached to the harness (shoulder belt) of child restraint systems mounted to cars include a tongue disclosed in

JP-A- 3-49702 (Patent Document 1 EP-A- 0 404 730).

The tongue described in the reference includes a pair of detachable left and right tongues (two in total). The tongue plates are attached to left and right harnesses (left and right shoulder belts) for restraining the body of a child passenger seated in a child restraint system to the child restraint system, respectively.

In mounting the tongue to a buckle unit, the left and right tongue plates are inserted in parallel into the tongue insertion holes of the buckle unit.

The reference discloses a structure in which the left and right tongue plates are not latched in the buckle unit unless the tongue plates are inserted into the tongue insertion holes at the same time. Thus, the left and right tongue plates, which are joined together in advance, are inserted into the tongue insertion holes.

The tongue disclosed in the reference is constructed such that the tongue plates each have a projection and a hole for the projection to pass through. The projection of the left tongue plate is brought into engagement with the hole of the right tongue plate, and the projection of the right tongue plate is brought into engagement with the hole of the left tongue plate and as such, the left and right tongue plates are joined together.

### [Problems to be Solved by the Invention]

### With the tongue disclosed in

JP-A-3-49702, to join the left and right tongues together, it is necessary to bring the projection of the left tongue plate into engagement with the hole of the right tongue plate and, the projection of the right tongue plate into engagement with the hole of the left tongue plate, so that its procedure is complicated. Also, the left and right tongue plates must be retained to prevent the projections from coming off from the holes until the tongue plates are latched to the buckle unit, so that its procedure is troublesome. GB-A-875 807 relates to a flexible magnetic member comprising a mass of rubber or like elastic material having incorporated therein a powdered, permanent magnetic material, the member having a plurality of closely spaced magnetic poles the polarity of which alternates from pole to pole.

Accordingly, it is an object of the present invention to provide a child restraint tongue capable of joining the left and right tongue plates together easily and tightly and a child restraint system including the child restraint tongue.

A child restraint tongue according to the present invention, in which a pair of tongue plates is inserted into tongue insertion holes of a buckle unit, includes magnets for joining the tongue plates by attraction according to claim 1.

The child restraint system according to the present invention includes this child restraint tongue and a buckle unit into which the child restraint tongue is inserted according to claim 2.

The left and right tongue plates of the child restraint tongue of the invention are joined together by the attraction of magnets. Accordingly, to join the left and right tongue plates together, the left tongue plates and the right tongue plate have only to be justified and brought into contact with each other, so that their joining operation is very easy. Also, since the connection of the left and right tongue plates is maintained by the attracting force of the magnets, there is no need to hold the tongue plates firmly to prevent them from separation when inserting the tongue plates into the tongue insertion holes of the buckle unit, so that its procedure is easy.

An embodiment of the present invention will be

### described with reference to the drawings.

Fig. 1 is a front view of a child restraint tongue according to an embodiment, showing a state before left and right tongue plates are joined together.
Fig. 2 is a front view showing a state in which the left and right tongue plates are joined together.
Fig. 3(a) is a cross-sectional view, taken along line IIIA-IIIA of Fig. 1. Fig. 3(b) is a cross-sectional view, taken along line IIIB-IIIB of Fig. 2.
Fig. 4 is a perspective view showing a state before the left and right tongue plates are joined together.

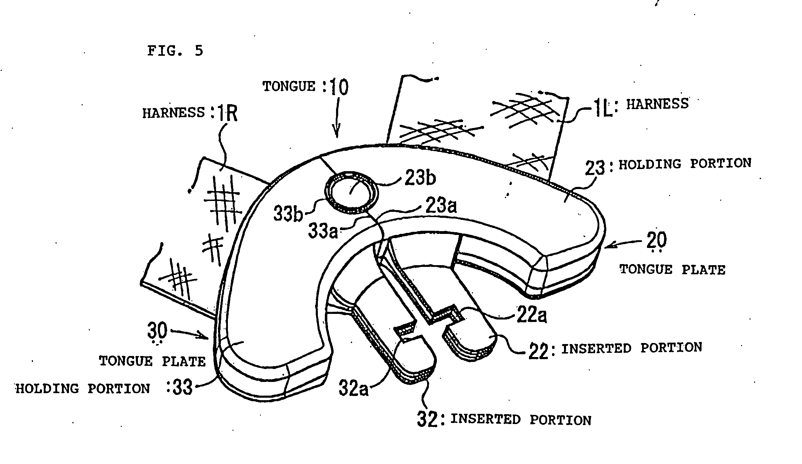

Fig. 5 is a perspective view showing a state in which the left and right tongue plates are joined together.
Fig. 6 is an exploded perspective view of the child restraint tongue of Fig. 1.
Fig. 7 is a front view showing the engaging relationship between the child restraint tongue of Fig. 1 and a buckle unit.

The left and right in the following description denotes the left and right for a child passenger seated in the child restraint system and is opposite to the direction in the drawings.

A child restraint tongue 10 includes a pair of detachable left and right tongue plates 20 and 30. The tongue plates 20 and 30 are attached to left and right harnesses (left and right shoulder belts) 1L and 1R, respectively, for restraining the body of a child passenger seated in a child restraint system (not shown). The tongue plates 20 and 30 include magnets 21 and 31 for attracting and joining them together.

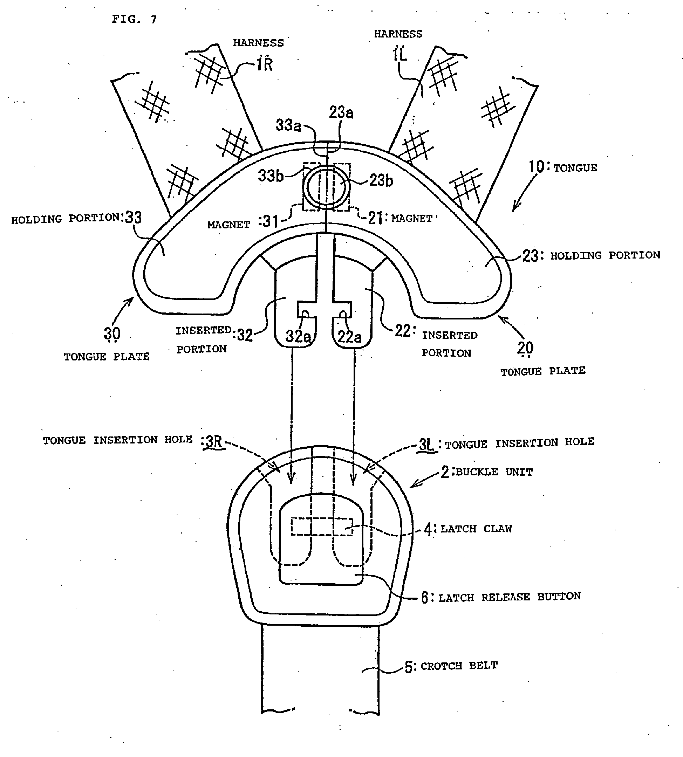

As shown in Fig. 7, the child restraint tongue 10 is mounted to a buckle unit 2 in such a manner that the left and right tongue plates 20 and 30 are inserted in parallel into the tongue insertion holes 3L and 3R of the buckle unit 2, respectively, and latched by a latch claw 4. The buckle unit 2 is connected to a crotch belt 5 which creeps between the child passenger's legs from the seat of the child restraint system toward the front of the body of the child passenger. Reference numeral 6 indicates a latch release button for releasing the latch of the tongue plates 20 and 30 by the latch claw 4.

The buckle unit 2 of this embodiment is constructed such that unless the left and right tongue plates 20 and 30 are inserted into the tongue insertion holes 3L and 3R at the same time, respectively, the latch claw 4 does not latch the tongue plates 20 and 30.

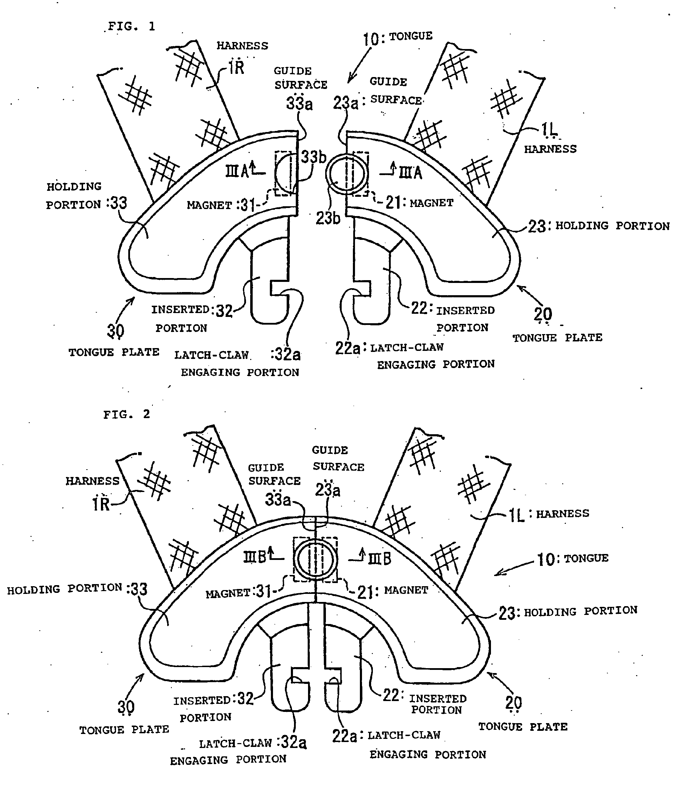

The tongue plates 20 and 30 include the magnets 21 and 31, inserted portions 22 and 32 which are inserted into the tongue insertion holes 3L and 3R of the buckle unit 2, and holding portions 23 and 33 provided at the base of the inserted portions 22 and 32 (the rear ends of the inserted portions 22 and 32 in the direction of insertion into the tongue insertion holes 3L and 3R), respectively. The holding portions 23 and 33 connect to the harnesses 1L and 1R, respectively. Reference numerals 22a and 32a indicate latch-claw engaging portions with which the latch claw 4 is brought into engagement when the inserted portions 22 and 32 are inserted into the tongue insertion holes 3L and 3R by a specified depth, respectively. In this embodiment, the latch-claw engaging portions 22a and 32a are recesses which are formed by cutting off the right side of the left inserted portion 22 and the left side of the right inserted portion 32 which are opposed when the tongue plates 20 and 30 are arranged in parallel as shown in Fig. 2.

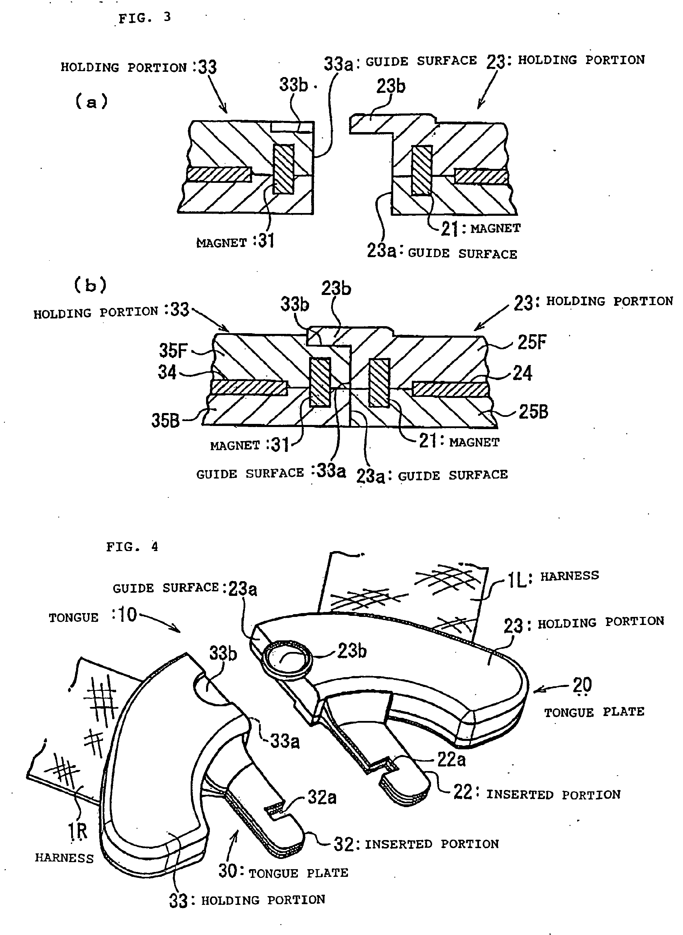

As shown in Figs. 1 and 2, the right side of the left holding portion 23 and the left side of the right holding portion 33 which are opposed when the tongue plates 20 and 30 are arranged in parallel form linear guide surfaces 23a and 33a which attach closely to each other. As shown in Figs. 3(a) and (b), the magnets 21 and 31 are embedded in the guide surfaces 23a and 33a, respectively. The magnets 21 and 31 are disposed such that the north pole and the south pole are opposed. Accordingly, when the left and right tongue plates 20 and 30 are disposed in parallel, the guide surfaces 23a and 33a are closely bonded together by the attracting force of the magnets 21 and 31 to join the left and right tongue plates 20 and 30 together.

As shown in Figs. 3(a) and (b), according to the embodiment, one guide surface 23a has a locating projection 23b projecting therefrom, while the other guide surface 33a has a recess 33b with which the projection 23b is brought into engagement when the guide surfaces 23a and 33a attach to each other. In joining the left and right tongue plates 20 and 30 of the tongue 10, the guide surfaces 23a and 33a are opposed to each other, with the projection 23b brought into engagement with the recess 33b. Accordingly, the left and right tongue plates 20 and 30 are joined together without misalignment.

According to the embodiment, the left and right tongue plates 20 and 30 include core materials 24 and 34 which function as the respective frameworks thereof, front covers 25F and 35F which cover the surface of the core materials 24 and 34, and back covers 25B and 35B which cover the back thereof, respectively. The core materials 24 and 34 are made of metal plates, while the front covers 25F and 35F and the back covers 25B and 35B are made of synthetic resin.

The core materials 24 and 34 serve as framework for integrating the inserted portions 22 and 32 and the holding portions 23 and 33, respectively. Reference numerals 24a and 34a are harness insertion holes provided in the positions of the core materials 24 and 34 which serve as the framework of the holding portions 23 and 33, respectively. The harnesses 1L and 1R are passed through the harness insertion holes 24a and 34a, respectively.

The front covers 25F and 35F are mounted on the surface of the core materials 24 and 34, while the back covers 25B and 35B are mounted on the back of the core materials 24 and 34, respectively. The respective outer rims of the front covers 25F and 35F and the back covers 25B and 35B are bonded together by joining means such as welding.

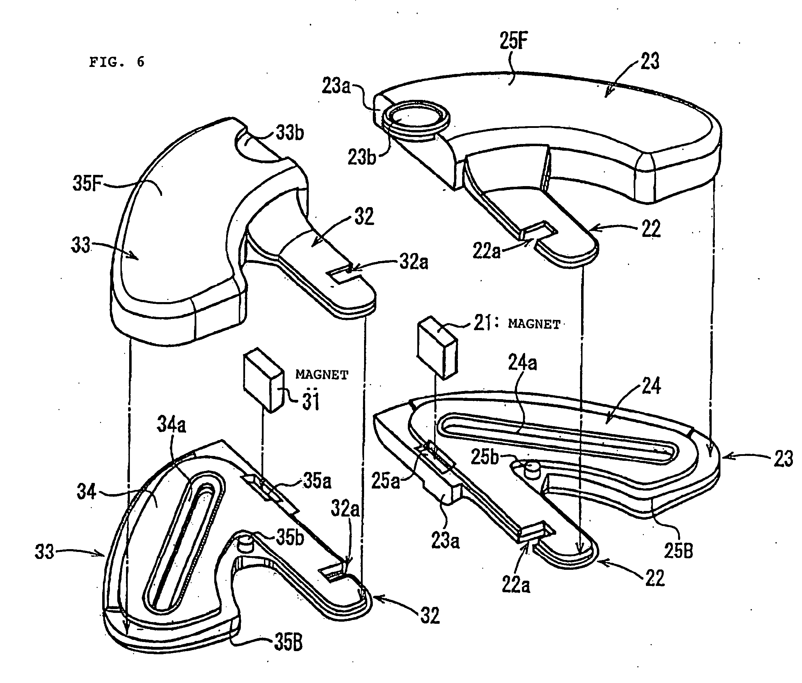

Reference numerals 25b and 35b in Fig. 6 denote projections for fitting the front covers 25F and 35F and the back covers 25B and 35B together, respectively.

The magnets 21 and 31 are disposed in the inner region between the front covers 25F and 35F and the back covers 25B and 35B such that they are located on the back of the guide surfaces 23a and 33a, respectively, when the front covers 25F and 35F and the back covers 25B and 35B are mounted to the core materials 24 and 34, respectively. Reference numerals 25a and 35a of Fig. 6 indicate magnet cases for accommodating the magnets 21 and 31, respectively.

Instead of covering the front covers 25F and 35F and the back covers 25B and 35B which are made of synthetic resin, the core materials 24 and 34 and the magnets 21 and 31 may be covered with synthetic resin by insert molding.

In attaching this tongue 10 to the buckle unit 2, the guide surfaces 23a and 33a are opposed to each other, with the projection 23b on one guide surface 23a brought into engagement with the recess 33b of the other guide surface 33a and thus the left and right tongue plates 20 and 30 are joined together in parallel by the attracting force of the magnets 21 and 31. Then the inserted portions 22 and 32 of the tongue plates 20 and 30 are inserted into the tongue insertion holes 3L and 3R of the buckle unit 2, respectively. In that case, since the inserted portions 22 and 32 are inserted into the tongue insertion holes 3L and 3R at the same time, the latch claw 4 is brought into engagement with the respective latch-claw engaging portions 22a and 32a of the inserted portions 22 and 32 and as such, both of the tongue plates 20 and 30 are latched to the buckle unit 2.

To disengage the tongue 10 from the buckle unit 2, the latch release button 6 of the buckle unit 2 is operated. Thus, the latch of the tongue plates 20 and 30 with the latch claw 4 is released and as such, the inserted portions 22 and 32 are brought out of engagement with the tongue insertion holes 3L and 3R.

The left and right tongue plates 20 and 30 of the child restraint tongue 10 are joined together by the attracting force of the magnets 21 and 31. Accordingly, to join them, the guide surfaces 23a and 33a have only to be brought into contact with each other, with the locating projection 23b fitted in the recess 33b, so that the joining operation is very easy. Also, after the tongue plates 20 and 30 have been joined together, the connection can be maintained by the attracting force of the magnets 21 and 31 without the need for retaining them to prevent the separation of them, thus facilitating insertion of the tongue plates 20 and 30 into the buckle unit 2.

It is to be understood that the foregoing embodiment is only an example of the present invention and that the invention is not limited to the foregoing embodiment.

## Claims

1. A child restraint tongue adapted to be attached to the harness of child restraint systems mounted in cars, the child restraint tongue (10) comprising:
a pair of tongue plates (20,30) to be inserted in parallel.into tongue insertion holes of a buckle unit (2), and
magnets (21, 31) for joining the tongue plates (20, 30) together by attraction, wherein said magnet (21, 31) is embedded in a linear guide surface (23a, 33a), said guide surface being provided in each of the tongue plates (20, 30) and attached closely to each other when the tongue plates (20, 30) are arranged in parallel, and wherein, when the guide surfaces (23a, 33a) are attached to each other, a locating projection (23b) projecting from one guide surface (23a) is in engagement with a recess (33b) of the other guide surface (33a).

2. A child restraint system, comprising the child restraint tongue (10) according to Claim 1 and a buckle unit (2) into which the child restraint tongue (10) is inserted.

## Patentansprüche

1. Kinderrückhaltezunge, die eingerichtet ist, am Gurtzeug von Kinderrückhaltesystemen befestigt zu werden, die in Autos eingebaut werden, wobei die Kinderrückhaltezunge (10) ein Paar Zungenplatten (20, 30), die parallel in Zungeneinsatzlöcher einer Schlosseinheit (2) eingesetzt werden sollen, und Magnete (21, 31) aufweist, um die Zungenplatten (20, 30) durch Anziehung miteinander zu verbinden,
wobei der Magnet (21, 31) in eine lineare Führungsfläche (23a, 33a) eingebettet ist, wobei die Führungsflächen in jeder der Zungenplatten (20, 30) vorgesehen sind und eng aneinander befestigt sind, wenn die Zungenplatten (20, 30) parallel angeordnet sind,
und
wobei wenn die Führungsflächen (23a, 33a) aneinander befestigt sind, ein Positionierungsvorsprung (23b), der von einer Führungsfläche (23a) vorsteht, mit einer Aussparung (33b) der anderen Führungsfläche (33) ein Eingriff steht.

2. Kinderrückhaltesystem, das die Kinderrückhaltezunge (10) nach Anspruch 1 und eine Schlosseinheit (2) aufweist, in die die Kinderrückhaltezunge (10) eingesetzt wird.

## Revendications

1. Languette de retenue pour enfant, prévue pour être fixée au harnais d'un système de retenue pour enfant monté dans une voiture, ladite languette de retenue (10) comprenant : une paire de plaques à languettes (20, 30) à insérer parallèlement dans des trous d'insertion de languettes d'une unité de boucle (2), et des aimants (21, 31) pour assembler les plaques à languettes (20, 30) par attraction magnétique, où chaque aimant (21, 31) est noyé dans une surface de guidage linéaire (23a, 33a), ladite surface de guidage étant prévue dans chacune des plaques à languettes (20, 30) et assemblée étroitement à l'autre quand les plaques à languettes (20, 30) sont ajustées parallèlement, et où, quand les surfaces de guidage (23a, 33a) sont assemblées, une saillie de positionnement (23b) dépassant d'une surface de guidage (23a) est engagée dans une cavité (33b) de l'autre surface de guidage (33a).

2. Système de retenue pour enfant, comprenant la languette de retenue pour enfant (10) selon la revendication 1 et une unité de boucle (2) dans laquelle la languette de retenue pour enfant (10) est insérée.
